# EUROPÄISCHE PATENTSCHRIFT

(11) **EP 1 022 298 B1**
(45) Veröffentlichungstag und Bekanntmachung des Hinweises auf die Patenterteilung: **12.06.2002**
(21) Anmeldenummer: 99125086.1
(22) Anmeldetag: 16.12.1999
(51) Int. Cl.: C08G 18/18, B01J 31/02

(54) **Foggingarme Katalysatoren für die Herstellung von Polyurethanen**
Low fogging catalysts for producing polyurethanes
Catalysateurs à base fogging pour la production de polyurethanes

(30) Priorität: 22.01.1999 DE 19902505
(43) Veröffentlichungstag der Anmeldung: 26.07.2000
(73) Patentinhaber: BASF AKTIENGESELLSCHAFT, 67056 Ludwigshafen (DE)
(72) Erfinder: Horn, Peter, Dr., 69118 Heidelberg (DE); Schwäbisch, Hans, 76764 Rheinzabern (DE)

(56) Entgegenhaltungen:
- EP-A- 0 629 607
- EP-A- 0 677 540
- WO-A-98/49143
- DE-A- 19 512 480

## Beschreibung

Die Erfindung betrifft foggingarme Katalysatoren für die Herstellung von Polyurethanen, ihre Herstellung sowie ihre Verwendung.

Polyurethane sind seit langem bekannt und vielfach in der Literatur beschrieben. Ihre Herstellung erfolgt zumeist durch Umsetzung von Polyisocyanaten mit Verbindungen mit mindestens zwei mit Isocyanatgruppen reaktiven Wasserstoffatomen. Die Umsetzung. erfolgt zumeist unter Einsatz von Katalysatoren. Bevorzugte Katalysatoren sind, neben Salzen von Schwermetallen, Verbindungen mit Aminogruppen, insbesondere sekundären und tertiären Aminogruppen. Diese Aminogruppen enthaltenden Verbindungen zeigen gute katalytische Eigenschaften. Nachteilig an ihnen ist jedoch ihr starker Geruch. Dieser wirkt bei der Polyurethanherstellung sehr störend. Besonders unangenehm ist es auch, daß die Aminkatalysatoren häufig nicht in das Polyurethangerüst eingebaut werden und mit der Zeit aus dem Polyurethan migrieren. Diese Migration von Bestandteilen aus dem Polyurethan, das auch als Fogging bezeichnet wird, ist ein echter Qualitätsmangel bei Polyurethanen. Zur Behebung dieses Mangels wurde beispielsweise vorgeschlagen, die als Katalysatoren verwendeten Amine mit funktionellen Gruppen zu versehen, damit sie in das Polyurethangerüst eingebaut werden können. In US-A-3,448,065 und EP-A-451 826 werden Hydroxyalkylimidazole beschrieben, die über ihre Hydroxylgruppe in das Polymergerüst eingebaut werden. EP-A-677 540 beschreibt ein Verfahren zur Herstellung von Polyurethan-Weichschaumstoffen, bei dem als Katalysatoren substituierte Imidazole eingesetzt werden, die an ihren Substituenten aktive Wasserstoffatome tragen und über diese in das Polymergerüst eingebaut werden. Nachteilig ist hierbei, daß-die zumeist monofunktionellen substituierten Imidazole bei der Urethanbildungsreaktion als Kettenabbrecher wirken sowie auf Grund ihrer raschen Fixierung im Polymergerüst in der Reaktionsmischung nicht mehr frei beweglich sind. Das kann zu Inhomogenitäten im Polyurethan führen. Darüber hinaus sind diese Verbindungen schwierig zu synthetisieren.

Aufgabe der Erfindung war es, Katalysatoren für die Herstellung von Polyurethanen bereitzustellen, die nicht aus dem Polyurethan migrieren, keine Störungen bei der Polyurethanbildungsreaktion bewirken und darüber hinaus einfach zugänglich sind.

Die Aufgabe konnte überraschenderweise gelöst werden durch foggingarme Katalysatoren für die Herstellung von Polyurethanen, herstellbar durch Umsetzung von polymeren, Carbonsäure- und/oder Carbonsäureanhydridgruppen enthaltenden Verbindungen mit Verbindungen mit mindestens einer primären oder sekundären Aminogruppe und/oder mit Verbindungen mit mindestens einer tertiären Aminogruppe und mindestens einer mit Carbonsäuregruppen und Carbonsäureanhydridgruppen reaktiven Gruppe.

Gegenstand der Erfindung sind demzufolge foggingarme Katalysatoren für die Herstellung von Polyurethanen, herstellbar durch Umsetzung von polymeren, Carbonsäure- und/oder Carbonsäureanhydridgruppen enthaltenden Verbindungen mit Verbindungen mit mindestens einer primären oder sekundären Aminogruppe und/oder mit Verbindungen mit mindestens einer tertiären Aminogruppe und mindestens einer mit Carbonsäuregruppen und Carbonsäureanhydridgruppen reaktiven Gruppe.

Gegenstand der Erfindung ist weiterhin ein Verfahren zur Herstellung derartiger Katalysatoren.

Gegenstand der Erfindung ist weiterhin die Verwendung der erfindungsgemäßen foggingarmen Katalysatoren zur Herstellung von Polyurethanen.

Gegenstand der Erfindung ist weiterhin ein Verfahren zur Herstellung von Polyurethanen durch Umsetzung von Polyisocyanaten mit Verbindungen mit mindestens zwei mit Isocyanat reaktiven Wasserstoffatomen, dadurch gekennzeichnet, daß als Katalysatoren Verbindungen eingesetzt werden, die herstellbar sind durch Umsetzung von polymeren, Carbonsäure- und/oder Carbonsäureanhydridgruppen enthaltenden Verbindungen mit Verbindungen mit mindestens einer tertiären Aminogruppe und mindestens einer mit Carbonsäuregruppen und Carbonsäureanhydridgruppen reaktiven Gruppe.

Die erfindungsgemäßen foggingarmen Katalysatoren sind, wie ausgeführt, herstellbar durch Umsetzung von polymeren, Carbonsäureund/oder Carbonsäureanhydridgruppen enthaltenden Verbindungen mit Verbindungen mit mindestens einer tertiären Aminogruppe und mindestens einer mit Carbonsäuregruppen und Carbonsäureanhydridgruppen reaktiven Gruppe.

Als polymere, Carbonsäure- und/oder Carbonsäureanhydridgruppen enthaltende Verbindungen werden vorzugsweise solche eingesetzt, die durch Polymerisation von ethylenisch ungesättigten Carbonsäuren und/oder Carbonsäureanhydriden oder Copolymerisation von ethylenisch ungesättigten Carbonsäuren und/oder Carbonsäureanhydriden mit anderen ethylenisch ungesättigten Monomeren hergestellt werden. Als ethylenisch ungesättigte Carbonsäuren und/oder Carbonsäureanhydride werden vorzugsweise Maleinsäure, Maleinsäureanhydrid, (Meth)acrylsäure, Itaconsäure, Citraconsäure, Mesaconsäure, Fumarsäure, Methylmalonsäureanhydrid, insbesondere vorzugsweise Maleinsäure, Maleinsäureanhydrid sowie (Meth)acrylsäure eingesetzt.

Als ethylenisch ungesättigte Monomere kommen insbesondere Styrol sowie alle dem Fachmann geläufigen und aus der Literatur bekannten C₂- bis C₄₀-Olefine in Betracht. Vorzugsweise werden Monoolefine mit mindestens 4, bevorzugt mindestens 6 und besonders bevorzugt mindestens 8 Kohlenstoffatomen eingesetzt. Besonders bevorzugte Verbindungen sind Diisobuten, C₁₂-Olefine, C₁₈-Olefine und C₂₀₋₂₄-Olefine.

Vorzugsweise werden als polymere, Carbonsäure- und/oder Carbonsäureanhydridgruppen enthaltende Verbindungen Poly-Maleinsäureanhydrid, Copolymere aus Maleinsäureanhydrid und Diisobuten, Copolymere aus Maleinsäureanhydrid und Polyisobutylen, Copolymere aus Maleinsäureanhydrid und C₁₂-Olefinen, Copolymere aus Maleinsäureanhydrid und C₁₈-Olefinen und/oder Copolymere aus Maleinsäureanhydrid und C₂₀₋₂₄-Olefinen eingesetzt. Das Molekulargewicht dieser polymeren Verbindungen liegt vorzugsweise im Bereich von 350 bis 15000. Die Herstellung dieser Polymeren erfolgt nach bekannten Verfahren durch Polymerisation der ungesättigten Monomere.

Derartige Produkte sind handelsüblich. Sie werden beispielsweise von der BASF Aktiengesellschaft unter der Bezeichnung Sokalan® hergestellt.

Als Verbindungen mit mindestens einer primären oder sekundären Aminogruppe und/oder Verbindungen mit mindestens einer tertiären Aminogruppe und mindestens einer mit Carbonsäuregruppen und Carbonsäureanhydridgruppen reaktiven Gruppe werden vorzugsweise Verbindungen mit folgenden Strukturen eingesetzt: 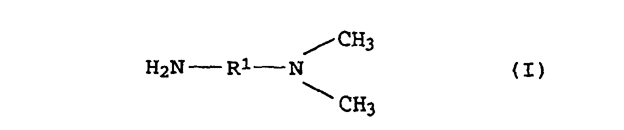 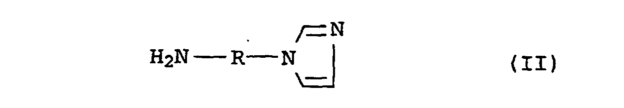 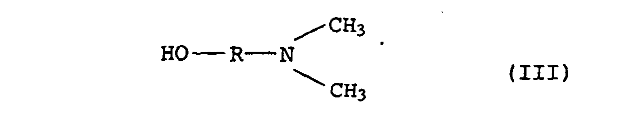 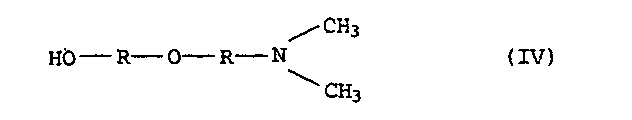 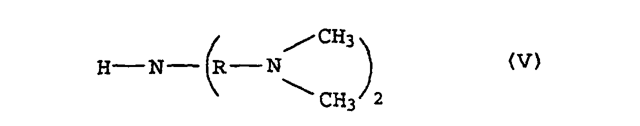 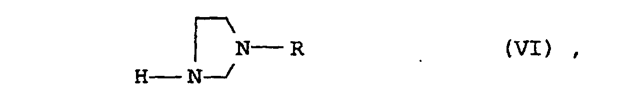 wobei R - gleich oder verschieden ein linearer oder verzweigter aliphatischer Rest mit 1 bis 20, vorzugsweise 2 bis 10 Kohlenstoffatomen ist.

Die Herstellung der erfindungsgemäßen foggingarmen Katalysatoren für die Herstellung von Polyurethanen erfolgt durch Umsetzung der polymeren Carbonsäure- und/oder Carbonsäureanhydridgruppen enthaltenden Verbindungen, im weiteren als polymere Verbindungen bezeichnet, mit Verbindungen mit mindestens einer tertiären Aminogruppe und mindestens einer mit Carbonsäuregruppen und Carbonsäureanhydridgruppen reaktiven Gruppe.

Diese Umsetzung erfolgt vorzugsweise stöchiometrisch. Es ist auch möglich, mit einem Unterschuß an Amin zu arbeiten. Hierbei werden in einer ersten Stufe die Säure- und/oder Anhydridgruppen mit den mit ihnen reaktiven Gruppen umgesetzt und in einer zweiten Stufe die nicht umgesetzten Säure- oder Anhydridgruppen durch Umsetzung mit Basen neutralisiert. Als Basen werden hierbei vorzugsweise basische Metalloxide und/oder -hydroxide, vorzugsweise Alkaliund/oder Erdalkalioxide und/oder -hydroxide und/oder Zinnoxide und/oder Wismutoxide, besonders bevorzugt Alkalihydroxide, eingesetzt.

Es ist prinzipiell auch möglich, mit einem Überschuß an Amin zu arbeiten. Hierbei können jedoch Restgehalte an freiem Amin im Katalysator verbleiben, die zu Fogging führen können.

Die Umsetzung der polymeren Verbindungen mit und/oder den Verbindungen mit mindestens einer tertiären Aminogruppe und mindestens einer mit Carbonsäuregruppen und Carbonsäureanhydridgruppen reaktiven Gruppe kann in Substanz erfolgen. Da die polymeren Verbindungen jedoch zumeist in fester oder hochviskoser Form vorliegen, ist es bevorzugt, die Umsetzung in Lösung durchzuführen. Als Lösungsmittel eignen sich alle Verbindungen, in denen die Edukte löslich sind und die sich gegenüber den Edukten und den Endprodukten weitgehend inert verhalten. Vorzugsweise werden Hydroxyolgruppen enthaltende Verbindungen eingesetzt, da diese mit den Polyurethanaufbaukomponenten verträglich sind und daher eine Abtrennung des Katalysators vom Lösungsmittel nicht notwendig ist. Geeignete Hydroxyolgruppen enthaltende Verbindungen sind Diole, beispielsweise Ethylenglykol und/oder Propylenglykol, oder auch Polyetherpolyole, wobei in diesem Fall vorzugsweise solche Polyetherpolyole eingesetzt werden sollten, die auch zur Herstellung der entsprechenden Polyurethane eingesetzt werden.

Die Umsetzung der polymeren Verbindungen mit den Verbindungen mit mindestens einer tertiären Aminogruppe und mindestens einer mit Carbonsäuregruppen und Carbonsäureanhydridgruppen reaktiven Gruppen erfolgt bei Temperaturen im Bereich von 20 bis 170°C und Normaldruck. Bei der Verwendung von primären Aminen erfolgt die Umsetzung vorzugsweise bei Temperaturen im Bereich von 20 bis 90°C, um die Bildung von Imiden zu verhindern. Bei der Verwendung von sekundären Aminen erfolgt die Umsetzung vorzugsweise bei Temperaturen im Bereich von 90 bis 130°C. Die Umsetzung mit den Metalloxiden und/oder -hydroxiden erfolgt vorzugsweise im Bereich von 75 bis 150°C, insbesondere im Bereich von 100 bis 145°C.

Eine Abtrennung der erfindungsgemäßen foggingarmen Katalysatoren vom Lösungsmittel ist, wie oben ausgeführt, zumeist nicht erforderlich. Auch eine spezielle Aufarbeitung der erfindungsgemäßen Katalysatoren muß nicht erfolgen, da die Reaktion zumeist sehr glatt verläuft und keine Nebenprodukte gebildet werden, die bei der Verwendung der Katalysatoren bei der Polyurethanherstellung störend wirken können.

Die Umsetzung sollte so geführt werden, daß die Säurezahl nach DIN 53 402 der erfindungsgemäßen foggingarmen Katalysatoren unter 25 mg KOH/g liegt, da bei höheren Säurezahlen eine Beeinträchtigung der Katalyse des Polyurethansystems auftreten kann.

Die erfindungsgemäßen foggingarmen Katalysatoren werden zumeist in Lösung eingesetzt. Die Vorteile dieser Verfahrensweise liegen einmal darin, daß, wie oben ausgeführt, auf eine Aufarbeitung der Katalysatoren nach der Herstellung verzichtet werden kann. Zum anderen wird die Handhabung der Katalysatoren sehr erleichtert, da sie sich in Lösung wesentlich besser mit den anderen Einsatzstoffen der Polyurethansysteme mischen lassen.

Die erfinaungsgemäßen Katalysatoren werden insbesondere als Katalysatoren für die Herstellung von Polyurethanen eingesetzt. Ihr Einsatz ist prinzipiell für alle Arten von Polyurethanen möglich, sowohl für kompakte als auch für geschäumte Polyurethane. Vorzugsweise erfolgt der Einsatz der erfindungsgemäßen Katalysatoren bei Anwendungen, bei denen das Fogging als besonders störend empfunden wird, das heißt vorzugsweise bei Polyurethanen, die in Innenräumen eingesetzt werden sollen, insbesondere bei Polyurethanen für den Einsatz in Kraftfahrzeugen. Besonders vorteilhaft ist ihr Einsatz bei der Herstellung von Integraischaumstoffen, die in großer Menge in Fahrzeuginnenräumen eingesetzt werden, beispielsweise als Lenkräder, Kopfstützen oder sonstige Formteile.

Die Herstellung der Polyurethane erfolgt, wie bereits ausgeführt, durch Umsetzung von Polyisocyanaten mit Verbindungen mit mindestens zwei mit Isocyanatgruppen reaktiven Wasserstoffatomen. Als Polyisocyanate kommen hierbei alle Isocyanate mit zwei oder mehreren Isocyanatgruppen im Molekül zum Einsatz. Dabei können sowohl aliphatische Isocyanate, wie Hexamethylendiisocyanat (HDI) oder Isophorondiisocyanat (IPDI), oder vorzugsweise aromatische Isocyanate, wie Toluylendiisocyanat (TDI), Diphenylmethandiisocyanat (MDI) oder Mischungen aus Diphenylmethandiisocyanat und Polymethylenpolyphenylenpolyisocyanaten (Roh-MDI) verwendet werden. Es ist auch möglich, Isocyanate einzusetzen, die durch den Einbau von Urethan-, Uretdion-, Isocyanurat-, Allophanat-, Uretonimin- und anderen Gruppen modifiziert wurden, sogenannte modifizierte Isocyanate.

Als Verbindungen mit mindestens zwei mit Isocyanatgruppen reaktiven Gruppen können Amine, Mercaptane, vorzugsweise jedoch Polyole, eingesetzt werden. Unter den Polyolen haben die Polyetherpolyole und die Polyesterpolyole die größte technische Bedeutung. Die zur Herstellung von Polyurethanen eingesetzten Polyetherpolyole werden zumeist durch basisch katalysierte Anlagerung von Alkylenoxiden, insbesondere Ethylenoxid und/oder Propylenoxid, an H-funktionelle Startsubstanzen hergestelit. Polyesterpolyole werden zumeist durch Veresterung von mebrfunktionellen Carbonsäuren mit mehrfunktionellen Alkoholen hergestellt.

Zu den Verbindungen mit mindestens zwei mit Isocyanatgruppen reaktiven Gruppen gehören auch die Kettenverlängerer und/oder Vernetzer, die gegebenenfalls mit eingesetzt werden können. Dabei handelt es sich um mindestens zweifunktionelle Amine und/öder Alkohole mit Molekulargewichten im Bereich von 60 bis 400.

Weiterhin eingesetzt werden gegebenenfalls Treibmittel, Co-Katalysatoren sowie Hilfs- und/oder Zusatzstoffe.

In der Technik ist es üblich, alle Einsatzstoffe mit Ausnahme der Polyisocyanate zu einer sogenannten Polyolkomponente zu vermischen und diese mit den Polyisocyanaten zum Polyurethan umzusetzen.

Eine Übersicht über die Einsatzstoffe für die Herstellung von Polyurethanen sowie die dazu angewendeten Verfahren findet sich beispielsweise im Kunststoffhandbuch, Band 7 "Polyurethane", Carl-rianser-Verlag München Wien, 1. Auflage 1966, 2. Auflage 1983 und 3. Auflage 1993.

Die erfindungsgemäßen foggingarmen Katalysatoren werden zumeist in einer Menge von 0,005 bis 1,0 Gew.-%, bezogen auf die Polyolkomponente, eingesetzt. Zur Optimierung der katalytischen Wirkung können die erfindungsgemäßen Katalysatoren gemeinsam mit Co-Katalysatoren eingesetzt werden. Als Co-Katalysatoren kommen alle in der Polyurethanchemie üblichen Katalysatoren in Betracht. Die Auswahl erfolgt in Abhängigkeit von den konkreten Anforderungen an die Polyurethansysteme.

Die erfindungsgemäßen foggingarmen Katalysatoren haben neben ihrer Foggingarmut noch weitere Vorteile. So können durch Anlagerung verschiedener Verbindungen an das Polymere Katalysatoren mit einer breiten katalytischen Wirkung synthetisiert werden. Damit müssen nicht, wie häufig nötig, kleine Mengen verschiedener Katalysatoren dem Polyurethansystem zugesetzt werden. Da die erfindungsgemäßen Katalysatoren weder giftig noch reizend sind, können sie wesentlich problemloser gehandhabt werden als die Aminkatalysatoren. Außerdem können sie bei der Herstellung von Formteilen die Wirkung der inneren Trennmittel verbessern.

Die Erfindung soll an nachstehenden Beispielen näher erläutert werden:

### Herstellung der foggingarmen Katalysatoren

### Beispiel 1

127 g (1 Mol bezogen auf eine Anhydridgruppe) eines Polymeren aus Maleinsäureanhydrid und Ethyl-benzol wurden in 370 g Ethylenglykol gelöst. Zu dieser Lösung wurden bei einer Temperatur von 80°C 187 g (1 Mol) Bis(Dimethylaminopropyl)amin in 30 Minuten zugetropft. Nach zwei Stunden wurde die Säurezahl-der Reaktionsmischung nach DIN 53 402 bestimmt, die Reaktionsmischung auf 90°C erwärmt und bei dieser Temperatur 56 g Kaliumhydroxid zugesetzt. Danach wurde die Reaktionsmischung zwei Stunden auf 80°C belassen und anschließend auf Raumtemperatur abgekühlt.

### Beispiel 2

Es wurde verfahren wie in Beispiel 1, jedoch wurde an Stelle von Bis(Dimethylaminopropyl)-amin 1 Mol 2-Methylimidazol eingesetzt.

### Beispiel 3

Es wurde verfahren wie in Beispiel 1, jedoch wurde an Stelle von Bis(Dimethylaminopropyl)-amin 1 Mol Aminopropylimidazol eingesetzt.

### Beispiel 4

Es wurde verfahren wie in Beispiel 1, jedoch wurde an Stelle von Bis(Dimethylaminopropyl)-amin 1 Mol Ethylimidazol eingesetzt.

### Beispiel 5

Es wurde verfahren wie in Beispiel 1, jedoch wurde an Stelle von Bis(Dimethylaminopropyl)-amin 1 Mol Ethylmethylimidazol eingesetzt.

### Beispiel 6

Es wurde verfahren wie in Beispiel 1, jedoch wurde an Stelle von Bis (Dimethylaminopropyl)-amin 1 Mol Methylpiperazin eingesetzt.

### Beispiel 7

Es wurde verfahren wie in Beispiel 1, jedoch wurde an Stelle von Bis(Dimethylaminopropyl)-amin 1 Mol Dimethylaminoethanol eingesetzt.

### Beispiel 8

280 g (1 Mol bezogen auf eine Anhydridgruppe) eines Copolymeren aus Maleinsäureanhydrid und C₁₂-Olefin mit einem Molgewicht M_{w} von 6000 g/mol werden auf 100°C erwärmt. Dazu werden 102 g (1 Mol) Dimethylaminopropylamin in 30 Minuten zugetropft und die Reaktionsmischung auf 140°C erwärmt. Nach drei Stunden wird das Reaktionsgemisch auf 100°C abgekühlt und bei dieser Temperatur in Ethylenglykol gelöst.

### Beispiel 9

255 g (1 Mol bezogen auf eine Anhydridgruppe) eines Copolymeren aus Maleinsäureanhydrid und Diisobuten werden auf 100°C erwärmt. Dazu werden 133 g Dimethylamino-Ethoxi-Ethanol in 30 Minuten zugetropft und die Reaktionsmischung auf 145°C erwärmt. Nach drei Stunden wird das Reaktionsgemisch auf 100°C abgekühlt und bei dieser Temperatur in Ethylenglykol gelöst und die freien Carboxylgruppen mit 56 g (1 Mol) Kaliumhydroxid umgesetzt.

### Beispiel 10

1206 g (1 Mol bezogen auf die Verseifungszahl VZ = 93) werden auf 80°C erwärmt und 187 g (1 Mol) Bis(Dimethylaminopropyl)amin in 30 Minuten zugetropft. Das entstandene Reaktionsprodukt wird mit 56 g (1 Mol) Kaliumhydroxid umgesetzt.

### Herstellung von Halbhart-Integralschaumstoffen

### Beispiel 11 (Vergleich)

Es wurde eine Polyolkomponente aus folgenden Einsatzstoffen hergestellt:

| | |
|---|---|
| 32,00 | Gew.-Teile eines mit Glyzerin und Wasser gestarteten Polyetherols mit einer Hydroxylzahl von 30 mg KOH/g (Lupranol® 2046 der BASF Aktiengesellschaft) |
| 41,85 | Gew.-Teile eines mit Dimethylaminodipropylentriamin (DDT) gestarteten Polyetherols mit einer Hydroxylzahl von 30 mg KOH/g (Lupranol® VP 9207 der BASF Aktiengesellschaft) |
| 4,00 | Gew.-Teile eines ethoxylierten Glyzerins mit einer Hydroxylzahl von 535 mg KOH/g (Lupranol® VP 9209 der BASF Aktiengesellschaft) |
| 3,30 | Gew.-Teile eines mit Styrol/Acrylnitril gepfropften Polyetherols mit einer Hydroxylzahl von 25 mg KOH/g und einer Funktionalität von 2,6 (Lupranol® 4100 der BASF Aktiengesellschaft) |
| 2,20 | Gew.-Teile Wasser |
| 4,4 | Gew.-Teile Äpfelsäure |
| 1,60 | Gew.-Teile Rizinolsäure |
| 2,00 | Gew.-Teile eines propoxylierten Tripropylentetramins mit einer Hydroxylzahl von 335 mg KOH/g (Lupranol® VP 9233 der BASF Aktiengesellschaft) |
| 10,00 | Gew.-Teile eines mit Trimethylolpropan gestarteten Polyetherols einer Hydroxylzahl von 27 mg KOH/g (Lupranol® 2042 der BASF Aktiengesellschaft) |
| 0,75 | Gew.-Teile eines mit Glyzerin gestarteten Polyetherols einer Hydroxylzahl von 42 mg KOH/g (Lupranol® 2047 der BASF Aktiengesellschaft) |
| 2,00 | Gew.-Teile ethoxyliertes Sorbitanmonooleats als Haftvermittler |
| 0,30 | Gew.-Teile Kaliumacetat 25 %ig in Ethylenglykol als Katalysator |

100 Gew.-Teile dieser Polyolkomponente wurden mit 47,98 Gew.-Teilen eines Gemisches aus Diphenylmethandiisocyanat und Polyphenylenpolymethylenpolyisocyanat (Lupranat® M 20 W der BASF Aktiengesellschaft) bei einer Kennzahl von 100 umgesetzt. Die Formkörper wurden in einer auf 50°C vorgeheizten Form mit den Maßen 205 mm x 205 mm x 4 mm hergestellt. Durch Verdichtung lag das Raumgewicht bei 100 g/l. Parallel dazu wurden in Bechern freiverschäumte Schäume hergestellt.

Startzeit, Fadenziehzeit, Steigzeit und Raumgewicht wurden bei der Becherverschäumung, der Foggingwert von den Prüfplatten bestimmt.

### Beispiel 12 (erfindungsgemäß)

Es wurde verfahren wie in Beispiel 11, nur daß an Stelle von Kaliumacetat 6 Gew.-Teile des Katalysators gemäß Beispiel 1 eingesetzt wurden.

Die Polyurethane wiesen folgende Parameter auf:

**Tabelle 1**

| Beispiel | Startzeit | Abbindezeit | Steigzeit | Raumgewicht | Fogging |
|---|---|---|---|---|---|
| 11 | 17 | 68 | 104 | 66,0 | 0,12 |
| 12 | 16 | 56 | 82 | 50,2 | 0,00 |

Die Bestimmung des Foggingwertes erfolgte gemäß DIN 75 201 Verfahren B.

### Herstellung von Weich-Integralschaumstoffen

### Beispiele 13 bis 19

Es wurde eine Polyolkomponente aus folgenden Einsatzstoffen hergestellt:

| | |
|---|---|
| 80,50 | Gew.-Teile eines mit Glyzerin gestarteten Polyetherols mit einer Hydroxylzahl von 28 mg KOH/g (Lupranol® 2040 der BASF Aktiengesellschaft) |
| 5,00 | Gew.-Teile eines mit Styrol/Acrylnitril gepfropften Polyetherols mit einer Hydroxylzahl von 25 mg KOH/g und einer Funktionalität von 2,6 (Lupranol® 4100 der BASF Aktiengesellschaft) |
| 4,50 | Gew.-Teile Ethylenglykol |
| 3,00 | Gew-Teile Äpfelsäure, 50 %ig in Ethylenglykol |
| 1,7 | Gew.-Teile der Katalysatoren gemäß Tabelle 2 |

100 Gew.-Teile dieser Polyolkomponente wurden mit 47,15 Gew.-Teilen,eines Gemisches aus 60 Gew.-% mit Uretdiongruppen modifiziertem 4,4'-MDI und 40 Gew.-% Roh-MDI mit einer Kennzahl von 105 umgesetzt.

Die Polyolkomponente und die Isocyanatkomponente warden vermischt und in einer auf 50°C vorgeheizte Form mit den Maßen 205 mm X 205 mm X 4 mm zu Prüfplatten verschäumt. Das Raumgewicht Prüfplatten lag aufgrund der Verdichtung bei 500 g/l. Parallel dazu wurden in Bechern freiverschäumte Schäume hergestellt.

Startzeit, Fadenziehzeit, Steigzeit und Raumgewicht wurden bei der Becherverschäumung, der Foggingwert von den Prüfplatten bestimmt.

Die eingesetzten Katalysatoren, die Kennwerte der Schäume sowie die Werte für die Verschäumung sind in Tabelle 2 festgehalten.

**Tabelle 2**

| Beispiel | Katalysator | Start-Fadenzienzeit zeit | | Steigzeit | Ramngewicht | Fogging |
|---|---|---|---|---|---|---|
| 13 (V) | 1-Methylimidazol | 13 | 44 | 57 | 183 | 32,61 |
| 14 | Beispiel 2 | 12 | 31 | 35 | 179 | 5,23 |
| 15 | Beispiel 3 | 14 | 37 | 42 | 187 | 0,37 |
| 16 | Beispiel 4 | 14 | 33 | 36 | 182 | 8,82 |
| 17 | Beispiel 5 | 14 | 33 | 36 | 180 | 0,45 |
| 18 | Beispiel 6 | 14 | 30 | 36 | 179 | 0,96 |
| 19 | Beispiel 7 | 15 | 32 | 37 | 188 | 4,05 |

Die Bestimmung des Foggingwertes erfolgte gemäß DIN 75 201 Verfahren B.

## Patentansprüche

1. Foggingarme Katalysatoren für die Herstellung von Polyurethanen, herstellbar durch Umsetzung von polymeren, Carbonsäure- und/oder Carbonsäureanhydridgruppen enthaltenden Verbindungen mit Verbindungen mit mindestens einer tertiären Aminogruppe und mindestens einer mit Carbonsäuregruppen und Carbonsäureanhydridgruppen reaktiven Gruppe.

2. Foggingarme Katalysatoren nach Anspruch 1, **dadurch gekennzeichnet, daß** als polymere, Carbonsäure- und/oder Carbonsäureanhydridgruppen enthaltende Verbindungen Homo- und Copolymerisate aus olefinisch ungesättigten Mono- und Dicarbonsäuren und/oder Copolymerisate aus olefinisch ungesättigten Mono- und Dicarbonsäuren und C₂- bis C₄₀-Olefinen eingesetzt werden.

3. Foggingarme Katalysatoren nach Anspruch 1, **dadurch gekennzeichnet, daß** als polymere, Carbonsäure- und/oder Carbonsäureanhydridgruppen enthaltende Verbindungen Poly-Maleinsäureanhydrid, Copolymere aus Maleinsäureanhydrid und Diisobuten, Copolymere aus Maleinsäureanhydrid und Polyisobutylen, Copolymere aus Maleinsäureanhydrid und C₁₂-Olefinen, Copolymere aus Maleinsäureanhydrid und C₁₈-olefinen und/oder Copolymere aus Maleinsäureanhydrid und C₂₀₋₂₄-Olefinen eingesetzt werden.

4. Foggingarme Katalysatoren nach Anspruch 1, **dadurch gekennzeichnet, daß** die mit Carbonsäuregruppen und Carbonsäureanhydridgruppen reaktiven Gruppen primäre oder sekundäre Aminogruppen oder Hydroxylgruppen sind.

5. Foggingarme Katalysatoren nach Anspruch 4, **dadurch gekennzeichnet, daß** die Verbindungen mit mindestens einer primären oder sekundären Aminogruppe Imidazole sind.

6. Foggingarme Katalysatoren nach Anspruch 1, **dadurch gekennzeichnet, daß** die Verbindungen mit mindestens einer primären oder sekundären Aminogruppe aliphatische Amine sind.

7. Foggingarme Katalysatoren nach Anspruch 1, **dadurch gekennzeichnet, daß** die Verbindungen mit mindestens einer primären oder sekundären Aminogruppe Polyetheramine sind.

8. Verfahren zur Herstellung von foggingarmen Katalysatoren, **dadurch gekennzeichnet, daß** polymere, Carbonsäure- und/oder Carbonsäureanhydridgruppen enthaltende Verbindungen mit Verbindungen mit mindestens einer tertiären Aminogruppe und mindestens einer mit Carbonsäuregruppen und Carbonsäureanhydridgruppen reaktiven Gruppe umgesetzt werden.

9. Verfahren nach Anspruch 8, **dadurch gekennzeichnet, daß** die Umsetzung in einem Lösungsmittel durchgeführt wird.

10. Verwendung von foggingarmen Katalysatoren nach einem der Ansprüche 1 bis 7 zur Herstellung von Polyurethanen.

11. Verfahren zur Herstellung von Polyurethanen durch Umsetzung von Polyisocyanaten mit Verbindungen mit mindestens zwei mit Isocyanatgruppen reaktiven Gruppen in Anwesenheit eines Katalysators, **dadurch gekennzeichnet, daß** als Katalysator mindestens ein foggingarmer Katalysator nach einem der Ansprüche 1 bis 7 eingesetzt wird.

12. Polyurethane, herstellbar nach Anspruch 11.

## Claims

1. A low-fogging catalyst for producing polyurethanes which can be prepared by reacting polymeric compounds containing carboxyl groups and/or carboxylic anhydride groups with compounds having at least one tertiary amino group and at least one group which is reactive toward carboxyl groups and carboxylic anhydride groups.

2. A low-fogging catalyst as claimed in claim 1, wherein the polymeric compounds containing carboxyl groups and/or carboxylic anhydride groups are homopolymers and copolymers of olefinically unsaturated monocarboxylic and dicarboxylic acids and/or copolymers of olefinically unsaturated monocarboxylic and dicarboxylic acids and C₂-C₄₀-olefins.

3. A low-fogging catalyst as claimed in claim 1, wherein the polymeric compounds containing carboxyl groups and/or carboxylic anhydride groups are polymaleic anhydride, copolymers of maleic anhydride and diisobutene, copolymers of maleic anhydride and polyisobutylene, copolymers of maleic anhydride and C₁₂-olefins, copolymers of maleic anhydride and C₁₈-olefins and/or copolymers of maleic anhydride and C₂₀₋₂₄-olefins.

4. A low-fogging catalyst as claimed in claim 1, wherein the groups which are reactive toward carboxyl groups and carboxylic anhydride groups are primary or secondary amino groups or hydroxyl groups.

5. A low-fogging catalyst as claimed in claim 1, wherein the compounds having at least one primary or secondary amino group are imidazoles.

6. A low-fogging catalyst as claimed in claim 1, wherein the compounds having at least one primary or secondary amino group are aliphatic amines.

7. A low-fogging catalyst as claimed in claim 1, wherein the compounds having at least one primary or secondary amino group are polyetheramines.

8. A process for preparing low-fogging catalysts, which comprises reacting polymeric compounds containing carboxyl groups and/or carboxylic anhydride groups with compounds having at least one tertiary amino group and at least one group which is reactive toward carboxyl groups and carboxylic anhydride groups.

9. A process as claimed in claim 8, wherein the reaction is carried out in a solvent.

10. The use of a low-fogging catalyst as claimed in any of claims 1 to 7 for producing polyurethanes.

11. A process for producing polyurethanes by reacting polyisocyanates with compounds having at least two groups which are reactive toward isocyanate groups in the presence of a catalyst, wherein the catalyst used is at least one low-fogging catalyst as claimed in any of claims 1 to 7.

12. A polyurethane which can be produced as claimed in claim 11.

## Revendications

1. Catalyseurs à bas fogging pour la fabrication de polyuréthanes, aptes à être préparés par conversion de composés polymères contenant des groupes acide carboxylique et/ou anhydride d'acide carboxylique avec des composés comportant au moins un groupe amino tertiaire et au moins un groupe réagissant avec les groupes acide carboxylique et les groupes anhydride d'acide carboxylique.

2. Catalyseurs à bas fogging selon la revendication 1, **caractérisés en ce que** comme composés polymères contenant des groupes acide carboxylique et/ou anhydride d'acide carboxylique, on utilise des homo et copolymères d'acides mono et dicarboxyliques éthyléniquement insaturés et/ou des copolymères d'acides mono et dicarboxyliques éthyléniquement insaturés et des oléfines en C₂ à C₄₀.

3. Catalyseurs à bas fogging selon la revendication 1, **caractérisés en ce que** comme composés polymères contenant des groupes acide carboxylique et/ou anhydride d'acide carboxylique, on utilise le poly(anhydride d'acide maléique), des copolymères d'anhydride d'acide maléique et de diisobutène, des copolymères d'anhydride d'acide maléique et de polyisobutylène, des copolymères d'anhydride d'acide maléique et d'oléfines en C₁₂, des copolymères d'anhydride d'acide maléique et d'oléfines en C₁₈ et/ou des copolymères d'anhydride d'acide maléique et d'oléfines en C₂₀ à C₂₄.

4. Catalyseurs à bas fogging selon la revendication 1, **caractérisés en ce que** les groupes réagissant avec des groupes acide carboxylique et les groupes anhydride d'acide carboxylique sont des groupes amino primaires ou secondaires ou des groupes hydroxyle.

5. Catalyseurs à bas fogging selon la revendication 4, **caractérisés en ce que** les composés sont des imidazoles comportant au moins un groupe amino primaire ou secondaire.

6. Catalyseurs à bas fogging selon la revendication 1, **caractérisés en ce que** les composés comportant au moins un groupe amino primaire ou secondaire sont des amines aliphatiques.

7. Catalyseurs à bas fogging selon la revendication 1, **caractérisés en ce que** les composés sont des polyétheramines comportant au moins un groupe amino primaire ou secondaire.

8. Procédé de préparation de catalyseurs à bas fogging, **caractérisé en ce que** l'on fait réagir des composés polymères contenant des groupes acide carboxylique et/ou anhydride d'acide carboxylique avec des composés comportant au moins un groupe amino tertiaire et au moins un groupe réagissant avec les groupes acide carboxylique et les groupes anhydride d'acide carboxylique.

9. Procédé selon la revendication 8, **caractérisé en ce que** la conversion est réalisée dans un solvant.

10. Utilisation des catalyseurs à bas fogging selon l'une des revendications 1 à 7 pour la préparation de polyuréthanes.

11. Procédé de préparation de polyuréthanes par réaction de polyisocyanates avec des composés comportant au moins deux groupes réagissant avec les groupes isocyanate en présence d'un catalyseur, **caractérisé en ce que** comme catalyseur, on utilise au moins un catalyseur à bas fogging selon l'une des revendications 1 à 7.

12. Polyuréthane préparé selon la revendication 11.
